# EUROPEAN PATENT APPLICATION

(11) **EP 1 107 151 A2**
(43) Date of publication of application: **13.06.2001**
(21) Application number: 00204084.8
(22) Date of filing: 20.11.2000
(51) Int. Cl.: G06F 17/60

(54) **Computer software product and system for advertising business and services**

(30) Priority: 30.11.1999 US 451315
(71) Applicant: EASTMAN KODAK COMPANY, Rochester, New York 14650 (US)
(72) Inventor: McIntyre, Dale F., c/o Eastman Kodak Company, Rochester, New York 14650-2201 (US); Dworsky, Howard K., c/o Eastman Kodak Company, Rochester, New York 14650-2201 (US); Marks, Brian H., c/o Eastman Kodak Company, Rochester, New York 14650-2201 (US)
(74) Representative: Nunney, Ronald Frederick Adolphe

(57) **Abstract**

A computer software product and system for advertising business, products and services. The computer software product comprises a computer readable storage medium having a computer program which when loaded into a computer causes computer to locate and selecting at least one digital image provided in said storage medium and incorporate the image in a game. The software may automatically displaying a prestored sponsor message upon playing or completion of said game. The computer software may be part of system for managing a contest for a plurality of different sponsors. A host server accessible by a communication network is provided with a computer software program for providing contest information on behalf of a plurality of sponsors to a plurality of consumers. The software keeps track of the number of times contest information is provided on behalf of one of the sponsors and allocating a cost to each of said sponsors.

## Description

This invention relates to a computer software products and a system which uses utilizes personal images and games for advertising goods and/or services.

Playing games on computers has always been a popular use of computing power even before the advent of the personal computer. With the widespread popularity of personal computing, games consume a significant amount of consumer's time. It is natural that companies who have products to sell and thus advertise must compete for a consumer's discretionary time on any given day. With the relatively recent rise in popularity of the Internet, both games and forms of advertisement have multiplied greatly. Companies purchasing advertising and promotional space on the Internet are interested in metrics like how many impressions do their messages receive and more importantly, how many consumers actually select to link to the advertiser's own site as a result of the purchased promotional space.

Generally, games played on the computer are well known including a variety of games that are played remotely through connection to the Internet. Some games include the possibilities of playing against an opponent who is simultaneously connected to the same game via the Internet. There are puzzles and games available through the Internet whereupon completion, a consumer may elect to enter a drawing for a prize. One such example may be found in US Patent No. 5,791,991 where there is disclosed an interactive consumer product promotional method and computer match game. The game, which can be internet Web-based, is played by comparing selected consumer product categories with pre-selected spaces on a matrix to detect matches and be awarded a corresponding prize. Some of these games include the use of pictures supplied by the site as it was heretofore difficult for a user to supply a properly formatted picture for use in the game. For example, in US Patent No. 5,411,271 an image-based tic-tac-toe like computer game is disclosed where a player is initially shown the position of cartoon images and later asked to identify their locations. A "win" is rewarded with coupons which may be redeemed for prizes.

A problem with such games for an advertiser is that the images employed in the game don't hold a high degree of relevancy with any individual user and therefore lessen their interest in participating. This lack of relevancy reduces the value of the promotional space to potential advertisers and thus the efficiency with which their intended message is received.

The present invention increases the relevancy and value of the promotional space by utilizing personalized images into the playing structure of the game. In a software product and system made according to the present invention a high degree of promotional efficiency is obtained by combining and playing of a computer game which incorporates personal images with a sponsor's message.

The above, and other objects, advantages and novel features of the present invention will become more apparent from the accompanying detailed description thereof when considered in conjunction with the following drawings.

In accordance with one aspect of the present invention there is provided a computer software product comprising a computer readable storage medium having a computer program which when loaded into a personal computer causes the personal computer to perform the following steps:
a. locating and selecting at least one digital image provided in the storage medium;
b. incorporating the image in a game; and
c. automatically displaying a prestored message upon playing or completion of the game.

In accordance with another aspect of the present invention there is provided a computer software product comprising a computer readable storage medium having a computer program which when loaded into a personal computer causes the personal computer to perform the following steps:
a. locating and selecting at least one digital image provided in a storage media;
b. incorporating the image in a game; and
c. automatically forwarding the user to a remote computer site upon playing or completion of the game.

In still another aspect of the present invention there is provided a computer software product comprising a computer readable storage medium having a computer program which when loaded into a personal computer causes the personal computer to perform the following steps:
a. locating and selecting at least one digital image provided in the storage medium;
b. providing product advertisement which will be automatically displayed upon a predetermined action; and
c. automatically forwarding the user to a remote computer site upon the predetermined action.

In yet another aspect of the present invention there is provided a system for managing a contest for a plurality of different sponsors, comprising:
a host server accessible by a communication network, the host server having a computer software program for providing contest information on behalf of a plurality of sponsors to a plurality of consumers, the software program keeping track of the number of times contest information is provided on behalf of one of the sponsors and allocating a cost to each of the sponsors on which contest information has been provided.

In the detailed description of the preferred embodiments of the invention presented below, reference is made to the accompanying drawings in which:
FIG. 1 is a storage computer readable storage medium made in accordance with the present invention;
FIG. 2 is a system of a first embodiment of the invention;
FIG. 3 is a system diagram of a second embodiment of the present invention;
FIG. 4 is an exploded view of a game that may be played in accordance with the present invention;
FIG. 5 is a software flow chart describing the setup of the game according to the preferred embodiment; and
FIG. 6 is a software flow chart describing the execution of the game according to the preferred embodiment.

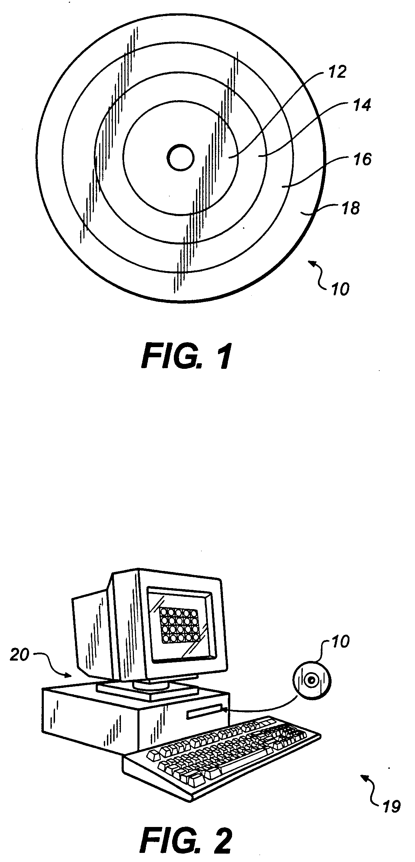

Fig. 1 shows a computer readable storage medium 10 made in accordance with the present invention. The storage medium 10 is divided into separate memory sections 12, 14, 16, and 18. In the embodiment illustrated computer readable storage medium 10 is a Compact Disc - Read Only Memory (CD-ROM). It will be understood by one skilled in the art that the computer readable storage medium 10 may take variety of other forms, for example but not by way of limitation, a rotating or linear magnetic media, a solid state memory device such as Compact Flash (CF) memory card, a floppy disk, Laser Cards from Lasercard Systems Corporation, or other optical memory technologies such as Mini-Disk from Sony Corp. It will also be understood that the computer readable storage medium 10 can be inserted into a computer 20 (See Fig. 2) as a discrete media shown in Fig. 1 or the data contained therein transmitted from a remote source (for example, a database/server) to memory in computer 20 via a network.

Memory sections 12, 14, 16, and 18 are capable of storing digitized data. In the embodiment illustrated, memory section 12 contains digital data relating to a contest entry number or a plurality of such numbers as a contest or multiple contests residing on the same computer readable storage medium 10 depending upon the number and type of contest stored on CD 10. Memory section 12 is written from a database provided by a contest sponsor. Memory section 14 contains an executable software program that when loaded into a computer will play at least one game. It will be understood that memory section 14 may include several games selectable by a user. Memory section 16 contains digital data relating to a particular advertising sponsor. The digital data in section 16 may take the form of images, sounds, videos, and text related to the sponsor of the game or games contained in memory section 14.

Memory section 18 contains digitized consumer images in a manner that is preferably consistent with a commercially available image format. For example, but not by way of limitation, the image may be provided in the format of a Picture CD™ product such as is provided by the Eastman Kodak Company. With the PictureCD™ products each having memory sections corresponding to memory sections 12, 14 and 16 are mass produced prior to distribution to local photofinishing operations. These local photofinishing operations process rolls of consumer film, scan the developed rolls of film and write the images in a digital format to a memory section on the Picture CD corresponding to memory section 18.

In an alternative embodiment of the present invention, the computer readable storage medium 10 may employ a conventional CD-ROM that would treat memory sections 12, 14, 16 and 18 as file folders in a hierarchical tree structure commonly known in the computer storage art.

Referring to Fig 2 a first system 19 made in accordance with the present invention is illustrated. The system 19 includes a computer 20 which is designed to accept a computer readable storage medium 10 in the form of a CD-ROM as described above. When computer readable storage medium 10 is placed in computer 20 the game may be automatically activated or may be played upon selection by the user. Confirmation that the player has won may be accomplished by phoning, internet, or by other wise providing the requested information to the sponsor as detailed in the game.

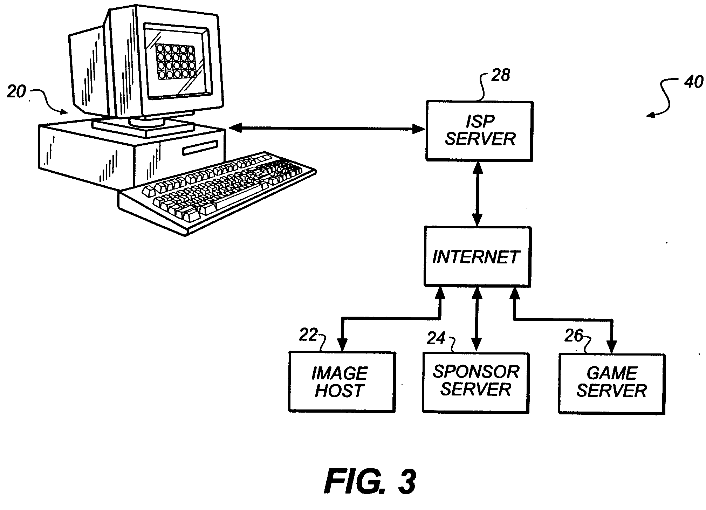

If desired the digital data provided by one or any number of the memory sections 12, 14, 16, and 18 need not be initially be provided on computer readable storage medium 10, but may be obtained by connecting computer 20 via an internal modem through an internet service provider ( ISP ) 28 to the internet to a readable memory storage database 22 as illustrated by system 40 of Fig.3. In system 40, the database 22 may be a host computer that stores consumer images that are in the game. In the embodiment illustrated, the images in database 22 comprise low resolution images suitable for display and manipulation on computer 20 upon connection of computer 20 to database 22 for the execution of the selected game.

As is also shown in Fig. 3, another computer readable memory storage database 24 may be provided which contains multimedia files provided by a sponsor of the game being played. These multimedia files provided by the sponsor include still images in various formats, sound files, video files and text messages. The sponsor provided files are then used by the executable game to set up a portion of the game. For example, the sponsor files may be used for a game background which is integrated with the user's play with the actual game, and/or for automatically connecting the user with a sponsor's contest or advertisement message at the conclusion or solution of the game or puzzle.

System 40 may also have readable storage memory database 26 which provides a choice of games for a user to play when connected to the Internet. Depending on the speed of the user's connection between computer 20 and ISP 28, the execution of the game may occur at the computer server shown as computer readable storage memory database 26. Alternatively, the computer readable storage memory database 26 provides an executable game that is downloaded to computer 20 via the Internet and ISP 28. In this case, the game is run on computer 20 and accessing computer storage memory databases 22 and 24 for images to use in the game and the appropriate sponsor's media messages/data.

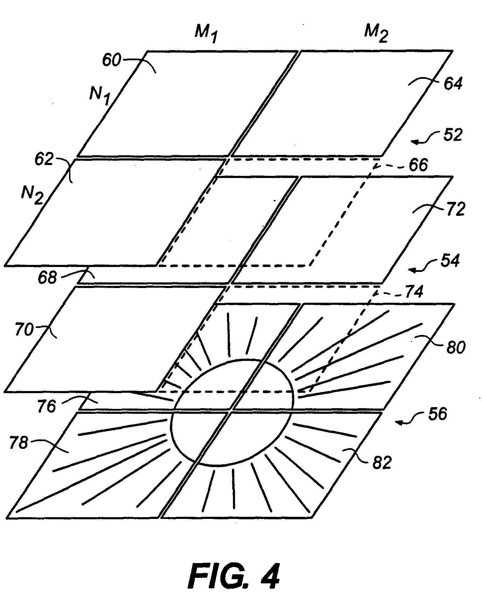

Fig. 4 illustrates one example of a game that may be played. In particular, an image matching game is provided which comprises a matrix of images formed of dimensions N x M. In the preferred embodiment, this matrix has three image display layers 52, 54, 56. Layer 52 (the top layer) comprises a plurality of cover image tiles 60, 62, 64 and 66 (shown in dash lines) used for identifying sections of the matrix. The middle layer 54 comprises consumer image tiles 68, 70, 72 and 74 used in playing of the game. The bottom layer 56 comprises background image tiles 76, 78, 80 and 82. The consumer image tiles 68, 70, 72 and 74 may be obtained from a variety of sources. In the embodiment illustrated, these images are obtained from a photofinishing order submitted by a consumer for processing. For example, a roll of exposed undeveloped photographic film is sent to a photofinishing lab for processing. The developed images are digitized, for example, by scanning of the developed film. The digitized images are then returned to the consumer on a CD, computer disk etc.

The top layer 52 is the display layer used to hide the consumer images contained in the middle layer 54 until the user selects the matrix position for viewing. The tile cover images 60, 62, 64 and 66 are provided by a game sponsor and are contained on the computer readable storage medium 10 in the memory section 16. These tile cover images 60, 62, 64 and 66 also provide the game sponsor means for displaying messages as the game begins and progresses.

The middle layer 54 is the display layer where consumer images 68, 70, 72 and 74 which are arranged randomly and displayed upon matrix position selection by the end user in search of a picture match. When a match is made between two successive matrix position selections by the user, the consumer images comprising the match (in this case, consumer images 68 and 70) are removed from the display allowing background image segments 76 and 78 to be displayed. These background image segments 76 and 78 are an enticement of the final complete image in the bottom layer and give the sponsor of the game another opportunity to display a message to the end user playing the game. Layer 54 may also provide instructions for entering a contest or for determining if the player is a winner in the contest.

Each image 68, 70, 72 and 74 has a position in the matrix as shown by consumer picture 70 in Fig. 4 which has a matrix position of N₂, M₁. Each image has a duplicate placed randomly in the matrix which is shown as consumer image 68 with coordinates N₂, M₂. The user is challenged to match images by uncovering them and remembering the positions of individual images in the matrix in the event that a match isn't made. When a match is made, the duplicate images are eliminated to reveal a partial view of a background image.

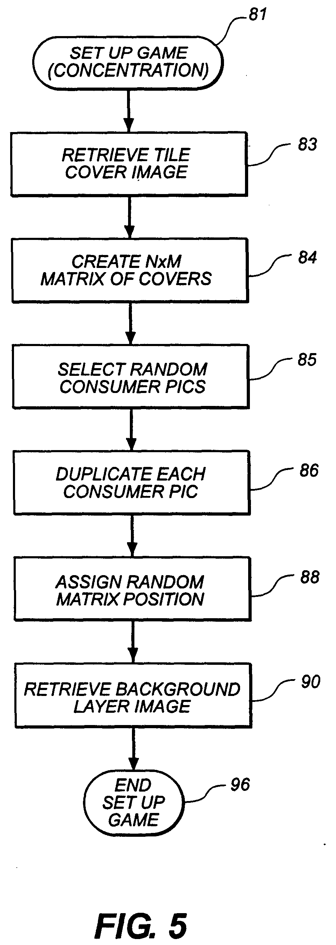

Fig. 5 illustrates the games set up procedure. The first step 81 would be to set up the game. For example, if a consumer image is provided on a computer CD, the CD may have a selection list where the consumer can be asked if they would wish to play the game. The consumer would then select a game if more than one game is offered. Otherwise the consumer will play the game as predetermined. In the particular embodiment illustrated, the game being played is Concentration, i.e., wherein the consumer attempts to pick the appropriate covered tiles so as to reveal two identical consumer picture tiles so that upon finding such a pair the image in the bottom tiles will be revealed.

The next step 83 would be to provide the cover image tiles 60, 62, 64 and 66. The cover image tiles may each be provided with an unique identification. One way in which this can be accomplished is to provide the various cover image tiles with numerals (or other identifying indicia) so that selection of the cover image tiles can be made by selecting two appropriate numbers (indicia) which are to be removed for revealing of the consumer image tiles associated therewith. Alternatively, the image for each cover image tile may be unique so the desired image tile may be individually selected. In yet another selection method a computer mouse or a touch screen is used. The tiles only need be identified as being separate tiles allowing the consumer to pick any two cover image tiles simply clicking on the computer mouse or by touching of the screen.

In the next step 84, the desired matrix size of N x N tiles is provided. For example, if a 2 x 2 matrix is desired, four covered image tile images will be provided.

In following step 85, a random selection of consumer images are selected such that there is provided paired images which can only be associated with each other. For example, the total number of cover image tiles divided by 2 will determine the actual number of pairs of consumer images that are to be selected. They can all be different images as provided on the CD or a single image that has been divided in the appropriate number of segments.

In the next step 86, each of the selected images are duplicated and at step 88 they are randomly aligned with cover images tiles 60, 62, 64 and 66. As previously noted, the matrix may comprise any desired number of tiles. In the following step 90, the images for the background layer 56 are provided and segmented to appropriate tile sizes. The game is now set for playing as shown at step 96.

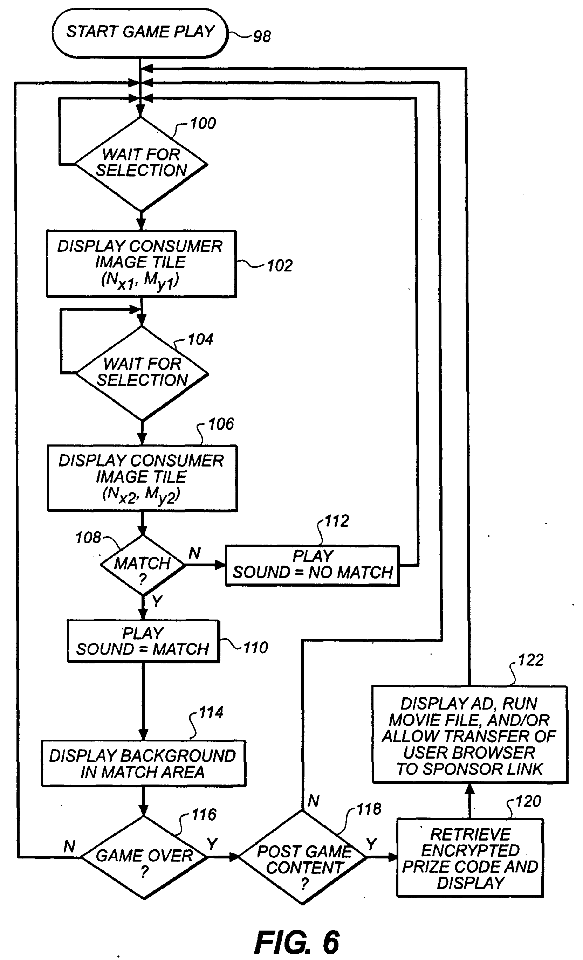

Referring to Fig. 6 there is illustrated a flow chart for playing of the game illustrated in Fig. 5. In particular, in the first step 98 the game is commenced, for example, by the appropriate selection of the start button by the person playing the game.

In the next step 100, the program waits for a first selection of a first cover image tile after which in step 102 the consumer image tile directly below the selected cover image tile is displayed.

In next step 104, a select second cover image tile is selected after which at step 106 the consumer image tile below the selected cover image tile is also displayed.

In step 108, the two selected displayed consumer images tiles are compared. If they match the game goes on to step 110 wherein the background image tiles directly below the two selected consumer image tiles are displayed at step 114. In step 108, if there is no match both of the selected consumer images tiles at step 112, are recovered by the cover image tiles. The player is then sent back to step 100 for reselecting of two cover image tiles to reveal their associated consumer image tiles until again two consumer image tiles are matched, in which case it goes to step 110.

As previously stated, once matched consumer image tiles are displayed, the background image tiles associated therewith at displayed at step 114. At step 116, it is determined if all the consumer image tiles have been matched and the background image tiles displayed. If all the background image tiles have not been displayed, then the game goes back to step 100 and the process is repeated until additional matches are made and all the background image tiles are displayed. The game is then over. The consumer at step 122 can decide either to reset a game or be hyper-linked to a computer owned by sponsor server via the internet or any other communication link to determine if he has won a contest, or enter a contest depending upon the format of the contest. An appropriate encryption code may be provided in memory section 12, or any other appropriate memory section. The player may also simply browse any other available feature provided by the sponsor's site, for example, to simply view other options, products or services being displayed by the sponsor. This associates an enjoyable experience, playing of the game, with advertising of the sponsor which will hopefully have a more positive experience for the consumer. In addition, the use of personal images provided by the consumer will provide a greater interest by the consumer in playing the game and/ or contest. Preferably, the consumer is automatically entered into a contest or is advised whether or not they have won a prize. The contest may simply provide that a coupon is forwarded to the consumer computer for printing at the consumer's local printer. There may be provided means for limiting the number and/or type of coupon that is provided to a single consumer. The consumer identification and/or the encrypted ID on the CD may be used.

In the embodiment illustrated there may be provided more than one sponsor. Each sponsor or any group of sponsors may be associated with the same game. Alternatively, a different game is specifically designated for each sponsor. In the event of multiple sponsors, the games may be monitored by host game server 26. Codes provided on the CD may associate the game provided with a particular sponsor. The host server may keep track of the number of times the games are played and to which sponsor the game is being played. In another form of the present invention, the games may be dispensed by the host server 26 in accordance with a predetermined schedule. Thus keeping track of the number of times a sponsor message contest and/or message is received. This also allows a sponsor to be billed for the actual number of times games have been played on their behalf. Appropriate tracking can be maintained for all of the sponsors on which the host server 26 is providing games. In addition the host server 26 may provide a plurality of different games which can be selected upon a variety of criteria. For example, the type of consumer asking for a game or the success of a particular game. Further the allocation of the number and/or type of games which are to be provided on behalf of any particular sponsor may be allocated in accordance with a predetermined criteria, for example upon the amount of fee paid by the sponsor, or the agreed rate at which the game is to be provided on behalf of the sponsor.

By using a host server 26, the actual sponsor need not every be actually contacted. This would avoid the necessity of a sponsor of expending cost in setting up and maintaining it's own game monitoring server. The host server can also stay abreast of market situation thereby providing the latest popular games and contest. An example of a suitable host for the host server could be the photofinisher who supplies the consumer digital images. Thus, the providing of the images and games can be easily coordinated by the photofinisher.

## Claims

1. A computer software product comprising a computer readable storage medium having a computer program which when loaded into a personal computer causes the personal computer to perform the following steps:
a. locating and selecting at least one digital image provided in said storage medium;
b. incorporating said image in a game; and
c. automatically displaying a prestored message upon playing or completion of said game.

2. A computer software product comprising a computer readable storage medium having a computer program which when loaded into a personal computer causes the personal computer to perform the following steps:
a. locating and selecting at least one digital image provided in a storage media;
b. incorporating said image in a game; and
c. automatically forwarding the user to a remote computer site upon playing or completion of said game.

3. A computer software product according to claim 1 or 2,
wherein said computer software product includes a contest entry number that be verified.

4. A computer software product according to claim 1 or 2,
wherein contest number is encrypted.

5. A computer software product according to claim 1 or 2,
wherein said coupon is provided by printing a coupon in response to instructions by said computer software.

6. A computer software product according to claim 1 or 2,
further comprising means for limiting the number of times said coupon may be printed.

7. A computer software product comprising a computer readable storage medium having a computer program which when loaded into a personal computer causes the personal computer to perform the following steps:
a. locating and selecting at least one digital image provided in said storage medium;
b. providing product advertisement which will be automatically displayed upon a predetermined action; and
c. automatically forwarding the user to a remote computer site upon said predetermined action.

8. A computer software product according to claim 7 wherein said predetermined action comprises the selection of an offering on said product advertisement.

9. A system for managing a contest for a plurality of different sponsors, comprising:
a host server accessible by a communication network, said host server having a computer software program for providing contest information on behalf of a plurality of sponsors to a plurality of consumers, said software program keeping track of the number of times contest information is provided on behalf of one of said sponsors and allocating a cost to each of said sponsors on which contest information has been provided.

10. A system for managing a contest for a sponsor, comprising:
a host server accessible by a communication network, said host server have a computer software program for providing contest information on behalf of said sponsor to a plurality of consumers, said software program keeping track of the number of times contest information is provided on behalf of one of said sponsor.
